Europäisches Patentamt

European Patent Office

Office européen des brevets

(19)

(11) Veröffentlichungsnummer: **0 290 723**
**B1**

(12) **EUROPÄISCHE PATENTSCHRIFT**

(45) Veröffentlichungstag der Patentschrift: **30.01.91**

(51) Int. Cl.⁵: **G 01 C 19/64, H 01 S 3/08**

(21) Anmeldenummer: **88102606.6**

(22) Anmeldetag: **23.02.88**

(54) Messvorrichtung mit einem Laser und einem Ringresonator.

(30) Priorität: **15.04.87 DE 3712815**

(43) Veröffentlichungstag der Anmeldung:
**17.11.88 Patentblatt 88/46**

(45) Bekanntmachung des Hinweises auf die
Patenterteilung:
**30.01.91 Patentblatt 91/05**

(84) Benannte Vertragsstaaten:
**AT BE CH DE ES FR GB GR IT LI LU NL SE**

(56) Entgegenhaltungen:
EP-A-0 213 965
GB-A-2 182 139
US-A-4 681 446

PATENT ABSTRACTS OF JAPAN, Band 5, Nr.
159 (E-77)831r, 14. Oktober 1981; & JP-A-56 90
584 (NIPPON DENSHIN DENWA KOSHA) 22-07-
1981

(73) Patentinhaber: **Bodenseewerk Gerätetechnik
GmbH
Alte Nussdorfer Strasse 15 Postfach 1120
D-7770 Überlingen/Bodensee (DE)**

(72) Erfinder: **Bernard, Walter, Dr.
Allmendweg 6
D-7758 Meersburg (DE)**
Erfinder: **Heppner, Joachim Georg, Dr.
Ulmer Strasse 27
D-7146 Tamm (DE)**
Erfinder: **Schwarz, Karl Hans
Hofäckerstrasse 8
D-7776 Owingen (DE)**

(74) Vertreter: **Weisse, Jürgen, Dipl.-Phys. et al
Patentanwälte Dipl.-Phys. Jürgen Weisse Dipl.-
Chem. Dr. Rudolf Wolgast Bökenbusch 41
Postfach 11 03 86
D-5620 Velbert 11 Langenberg (DE)**

**Beschreibung**

Technisches Gebiet

Die Erfindung betrifft eine Meßvorrichtung mit einem Laser und einem Ringresonator, bei welcher der Ringresonator durch eine zu messende physikalische Größe veränderbar ist, nach dem Oberbegriff des Patentanspruchs 1.

Die Veränderung des Ringresonators kann dabei aufgrund des Sagnac-Effektes erfolgen, wenn sich die Meßvorrichtung gegenüber dem inertialen Raum dreht. Dann wird die Resonanzfrequenz des mit einer Umlaufrichtung in dem Ringresonator umlaufenden Lichtes verschieden von der Resonanzfrequenz des mit entgegengesetzter Umlaufrichtung umlaufenden Lichtes. Diese Unterschiede können zur Bildung eines Meßwertes für die Drehgeschwindigkeit ausgenutzt werden. Das dürfte die bevorzugte Anwendung der Erfindung sein. Die Meßvorrichtung kann aber auch zur Messung von Magnetfeldern durch Ausnutzung des Faraday-Effekts in einem Ringresonator dienen. Andere Anwendungen sind die Messung von temperatur- oder druckinduzierten Veränderungen in einem Ringresonator oder die Messung von Beschleunigungen durch Ausnutzung des photoelastischen Effekts in einem Ringresonator.

Zugrundeliegender Stand der Technik

Es ist bekannt, Drehgeschwindigkeiten durch Ausnutzung des Sagnac-Effektes zu messen. Der Sagnac-Effekt besteht darin, daß sich in einem geschlossenen optischen Weg die effektiven optischen Weglängen für "rechtsherum" und "linksherum" laufende Lichtwellenlängen gegensinnig zueinander verändern, wenn die Meßvorrichtung sich um eine zur Ebene des optischen Weges senkrechte Achse dreht.

Es sind Laser-Gyroskope bekannt, bei denen der Resonanzhohlraum von einem ringförmigen Lichtweg gebildet ist. Das Laserelement ist dabei in diesem ringförmigen Resonanzhohlraum selbst angeordnet. Es ist dabei bekannt, ein Halbleiter-Laserelement in dem Resonanzhohlraum so anzuordnen, daß die Zberflächen unter dem Brewsterwinkel zur Achse des Lichtbündels verlaufen, so daß die Reflexion minimiert wird (DE-A1-31 31 232; US-A-4 425 236). Bei diesem Laser-Gyroskop soll der sonst übliche Gaslaser durch einen Halbleiterlaser ersetzt werden. Ansonsten sollen aber alle wesentlichen Eigenschaften eines mit einem Gaslaser arbeitenden Laser-Gyroskops erhalten bleiben. Dementsprechend treten bei einer Drehbewegung des Laser-Gyroskops zwei Frequenzen auf, deren Schwebungsfrequenz gemessen wird.

Es sind Meßvorrichtungen bekannt, bei denen Licht von einem Laser in einen passiven Ringresonator in zwei entgegengesetzten Umlaufrichtungen eingekoppelt wird. Der Laser ist dabei außerhalb des Ringresonators angeordnet. Die Änderung der optischen Weglänge des passiven Ringresonators für die beiden entgegengesetzten Umlaufrichtungen wird zur Messung der Drehgeschwindigkeit ausgenutzt.

Eine solche Meßvorrichtung mit passivem Ringresonator ist beispielsweise beschrieben in der US-A-4 135 822. Andere Konstruktionen mit passivem Ringresonator sind Gegenstand der US-A-4 661 964 (DE-A1-36 15 916), der DE-A-35 00 633, DE-A1-34 33 184 und DE-A1 33 32 660.

Bei den bekannten Meßvorrichtungen dieser Art ist die Frequenz des Lasers unabhängig von dem Ringresonator. Sie wird allenfalls durch Regelkreise, die auf den Laser selbst oder auf das von dem Laser ausgesandte Lichtbündel wirken, in Abhängigkeit von Intensitätsunterschieden zwischen den Lichtwellen der beiden Umlaufrichtungen variiert. Dabei ergibt sich aber das Problem, daß stets ein Teil des von dem Laser in den Ringresonator in den zwei Umlaufrichtungen eingekoppelten Lichtes den Ringresonator auf dem jeweils entgegengesetzten Einkoppelweg wieder verläßt und in den Laser zurückgelangt. Insbesondere dann, wenn die ausgesandte Lichtfrequenz des Lasers in dem Ringresonator in Resonanz gerät, kann dieser Anteil des zurückgekoppelten Lichts beträchtlich sein. Diese Lichtrückkopplung führt dazu, daß der Laser auf die Resonanz des äußeren Ringresonators einrastet. Das ist bei den bekannten Meßeinrichtungen ein durchaus unerwünschter Effekt, da dort die Frequenz des Lasers unabhängig moduliert werden soll. Es ist daher bekannt und üblich, zwischen dem Laser und dem Ringresonator eine "optische Isolation" oder eine Art "optische Diode" vorzusehen. Bei der oben erwähnten US-A-4 135 822 sind als solche optischen Dioden akusto-optische Modulatoren (Bragg-Zellen) vorgesehen.

Durch die EP-A3-0 213 965 ist es bekannt, das Emissionsspektrum eines Halbleiterlasers dadurch zu verengen, daß der Halbleiterlaser mit einer Endfläche an einen äußeren Resonator angekoppelt wird. Dabei muß der äußere Resonator an den Halbleiterlaser angepaßt werdem. Das geschieht nach der EP-A3-0 213 965 durch Veränderung des Brechungsindex des Resonators mittels einer angelegten elektrischen Spannung. Eine andere Anordnung, bei welcher das Emissionsspektrum eines Halbleiterlasers durch Ankoppeln eines Resonators verengt werden soll, ist in der JP-A-56-90 584 beschrieben. Dort ist der Resonator von einer lichtleitenden optischen Faser mit einem Spiegel an deren Ende gebildet.

Es hat sich gezeigt, daß die gewünschte optische Diodenwirkung nur unvollständig realisierbar ist, Insbesondere bei Verwendung von Halbleiterlasern sind Isolationsgrade kleiner als $10^{-6}$ erforderlich, um den Laser von seinem eigenen Licht unbeeinflußt zu lassen. Ein solcher Isolationsgrad ist mit Bragg- Zellen nicht erreichbar. Auch mit anderen Methoden kann ein solcher Isolationsgrad nur mit erheblichem Aufwand verwirklicht werden.

Offenbarung der Erfindung

Der Erfindung liegt die Aufgabe zugrunde, die mit der Notwendigkeit einer optischen Isolation zwischen Laser und Ringresonator verbundenen Probleme zu vermeiden.

Erfindungsgemäß wird diese Aufgabe durch die im Patentanspruch 1 aufgeführten Merkmale gelöst.

Es entfällt somit die Notwendigkeit einer optischen Isolation zwischen Laser und Ringresonator. Vielmehr bildet die optische Rückkopplung zwischen Ringresonator und Laser gerade das Funktionsprinzip der Erfindung.

Durch die gezielte Rückkopplung des aus dem Ringresonator kommenden Lichtes in den Laser wird außerdem eine spektrale Einengung des Lasers erreicht. Dadurch wird es möglich Halbleiterlaser als Lichtquelle zu verwenden. Halbleiterlaser sind preisgünstig. Sie sind aber sehr breitbandig. Das liegt an der schlechten Resonatorgüte des Halbleiterlasers. Dadurch eignen sich Halbleiterlaser normalerweise nur sehr schlecht für die Messung des Sagnac- Effektes. Bei der Meßvorrichtung nach der Erfindung kann der ohnehin für die Messung des Sagnac- Effektes (oder anderer Meßgrößen) vorhandene Ringresonator zur Verbesserung der Bandbreite eines Halbleiterlasers ausgenutzt werden.

Wenn der Ringresonator einen Teil des Resonanzhohlraumes des Lasers bildet, dann kann eine Oszillation des Lasers nur erfolgen, wenn die Frequenz des Laserlichtes mit der Eigenfrequenz des Ringresonators übereinstimmt. Wenn die Meßvorrichtung eine Drehbewegung um eine Achse senkrecht zur Ebene des Ringresonators ausführt, verschieben sich die Resonanzfrequenzen des Ringresonators für die eine und die andere Umlaufrichtung gegeneinander.

Durch die Modulation der optischen Weglänge im Resonanzhohlraum des Lasers ergibt sich ein Signal, das die Ableitung des Signals nach der — modulierten — Phase darstellt. Wenn die Frequenz des Lasers auf das Maximum der Resonanzkurve für die eine Umlaufrichtung im Ringresonator stabilisiert ist, dann ist das demodulierte Signal, das in der entgegengesetzten Umlaufrichtung gewonnen wird, ein direktes Maß z.B. für die Drehgeschwindigkeit der Meßvorrichtung. Wenn der Laserverstärker in vollständiger Sättigung betrieben wird, hängt das Signal über einen recht großen Bereich hinweg linear von z.B. der Drehgeschwindigkeit ab.

Vorteilhafte Ausgestaltungen der Erfindung sind Gegenstand der abhängigen Patentansprüche.

## Kurze Beschreibung der Zeichnungen

Einige Ausführungsbeispiele der Erfindung sind nachstehend unter Bezugnahme auf die zugehörigen Zeichnungen näher erläutert.

Fig. 1 veranschaulicht das Prinzip der Meßvorrichtung.

Fig. 2 ist ein Diagramm und zeigt die Intensität des in dem Ringresonator umlaufenden ichtes als Funktion der Phase.

Fig. 3 ist ein Diagramm und zeigt die Ableitung der Intensität des in dem Ringresonator umlaufenden Lichtes nach der Phase in Abhängigkeit von der Phase.

Fig. 4 ist ein Diagramm und zeigt die Abhängigkeit des mit der Meßvorrichtung erhaltenen Signals von der Drehgeschwindigkeit.

Fig. 5 ist eine schematische Darstellung einer Realisierung der Meßvorrichtung mit Spiegeln.

Fig. 6 ist eine schematische Darstellung einer Realisierung der Meßvorrichtung mit integrierter Optik.

Fig. 7 ist eine schematische Darstellung einer Realisierung der Meßvorrichtung mit Faseroptik.

Fig. 8 ist eine schematische Darstellung einer abgewandelten Ausführung der Meßvorrichtung.

## Bevorzugte Ausführungen der Erfindung

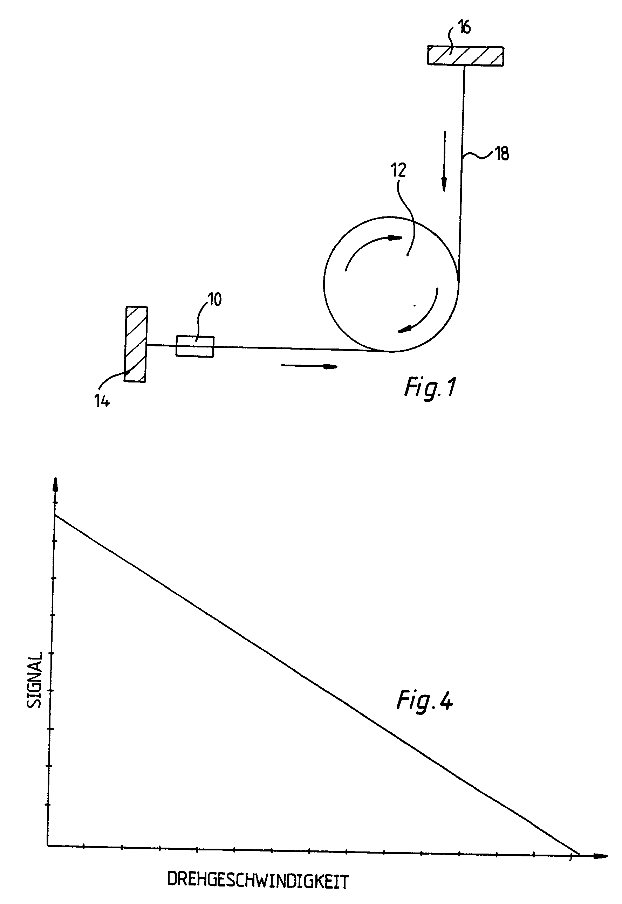

In Fig. 1 ist mit 10 ein Laser bezeichnet. Der Laser 10 kann ein Halbleiterlaser sein. Der Laser 10 ist mit einem Ringresonator 12 so gekoppelt, daß er in dem Ringresonator 12 eine in einer ersten Umlaufrichtung, nämlich entgegen dem Uhrzeigersinn in Fig. 1, umlaufende Lichtwelle erzeugt. Auf der dem Ringresonator abgewandten Seite des Lasers 10 ist ein Spiegel 14 angeordnet. Dieser Spiegel 14 begrenzt den Resonanzhohlraum des Lasers 10 auf einer Seite. Üblicherweise ist ein weiterer, teildurchlässiger Spiegel auf der gegenüberliegenden Seite des Lasers 10 angeordnet, wobei diese beiden Spiegel zwischen sich den Resonanzhohlraum des Lasers bestimmen. Dieser zweite Spiegel ist bei der beschriebenen Meßanordnung weggelassen. Stattdessen ist ein ringresonatorseitiger Endreflektor 16, ebenfalls in Form eines Spiegels vom Laser 10 aus gesehen jenseits des Ringresonators 12 angeordnet. Von dem Ringresonator 12 wird ein Teil des in der ersten Umlaufrichtung umlaufenden Lichts z.B. mittels eines Wellenleiters 18 ausgekoppelt und auf den Endreflektor 16 geleitet. Der Endreflektor 16 reflektiert das Licht in sich zurück. Von diesem durch den Endreflektor 16 zurückgeworfenen Licht läuft ein Teil zum Laser 10 und Spiegel 14 zurück. Der Endreflektor 16 begrenzt somit zusammen mit dem Spiegel 14 einen Resonanzhohlraum des Lasers 10. Ein Teil des von dem Endreflektor zurückgeworfenen Lichtes wird jedoch in den Ringresonator 12 eingekoppelt. Dieses Licht erzeugt in dem Ringresonator eine Lichtwelle, die mit einer entgegengesetzten, zweiten Umlaufrichtung, im Uhrzeigersinn in Fig. 1, in dem Ringresonator 12 umläuft.

Zwischenen den Endspiegeln 14 und 16 ist ein "linearer Resonator" gebildet, der den Laser 12 enthält. Dieser lineare Resonator sollte in Resonanz sein mit dem Ringresonator 12.

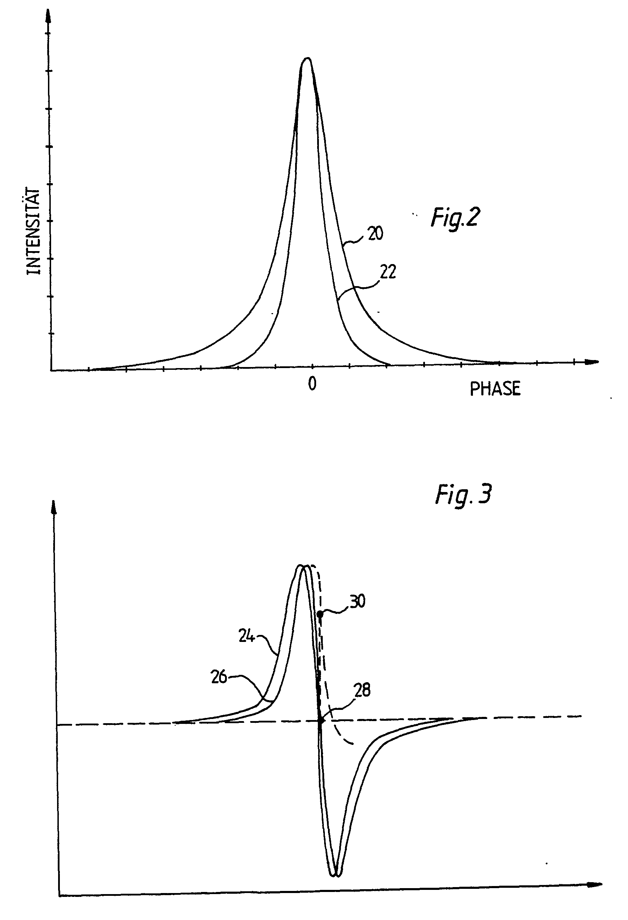

In Fig. 2 sind die Intensitäten der in dem Ringresonator 12 in der ersten und zweiten Umlaufrichtung umlaufenden Lichtwellen bezogen auf die jeweils eingekoppelte Intensität, also praktisch die Transmission des Ringresonators 12, als Funktion der Phase, also praktisch der optischen Weglänge des Ringresonators 12 dargestellt. Die Phase "0" bedeutet, daß die optische Weglänge des Ringresonators 12 einem ganzzahligen Vielfachen der Wellenlänge der in dem Ringresonator umlaufenden Lichtwelle entspricht. Diese Phase ist einer bestimmten Frequenz des Lichtes (oder einer Folge von Frequenzen entsprechend den Moden des Lasers) zugeordnet. Eine Frequenzabweichung von diesem Wert bewirkt, daß die Phase der Lichtwelle sich nach dem Durchlaufen des Ringresonators 12 um einen endlichen Wert geändert hat. Das ist die Abszisse von Fig. 2. Die Intensitäts- oder Transmissionskurve ist eine Glockenkurve. In Fig. 2 sind zwei solcher Kurven 20 und 22 dargestellt. Die Kurve 20 entspricht der in der ersten Umlaufrichtung in dem Ringresonator 12 umlaufenden Lichtwelle. Die Kurve 22 ist schmaler und entspricht der in der zweiten Umlaufrichtung in dem Ringresonator umlaufenden Lichtwelle. Die in der zweiten Umlaufrichtung umlaufende Lichtwelle ist der Filterwirkung des Ringresonators 12 zweimal unterworfen: Einmal wird eine Lichtintensität über den Wellenleiter 18 ausgekoppelt, die proportional der Intensität der in der ersten Umlaufrichtung umlaufenden Lichtwelle ist. Diese Intensität folgt der Kurve 20. Diese Lichtwelle wird dann in der entgegengesetzten, zweiten Umlaufrichtung wieder auf den Ringresonator geleitet, wo sie wieder eine von der Transmission des Ringresonators 12 und damit nach Kurve 20 von der Phase abhängige Schwächung erfährt. Die Intensitäts- oder Transmissionskurve 22 für die in der zweiten Umlaufrichtung umlaufende Lichtwelle fällt daher bei Abweichung von der Resonanzfrequenz und damit der Phase "0" stärker ab.

Wenn die Phase der umlaufenden Wellen moduliert wird, dann liefern diese Wellen an photoelektrischen Detektoren, die in der schematischen Darstellung von Fig. 1 nicht gezeigt sind, Wechselsignale mit der Modulationsfrequenz, deren Amplituden proportional der Steigung der Kurven 20 bzw. 22 sind, also proportional den Ableitungen der Kurven 20 und 22 nach der Phase. Diese Ableitungen sind in Fig. 3 als Kurven 24 bzw. 26 dargestellt.

Wenn die Meßvorrichtung keine Drehung gegenüber dem inertialen Raum ausführt, sind die optischen Weglängen des Ringresonators 12 für die erste und die zweite Umlaufrichtung gleich. Die beiden gegensinnig in dem Ringresonator 12 umlaufenden Wellen sind im gleichen Punkt bei der Phase "0" in Resonanz. Der Laser arbeitet bei dieser Frequenz. Dementsprechend sind auch die aufgrund der Phasenmodulation an den photoelektrischen Detektoren für die Lichtwelle mit der ersten Umlaufrichtung und die Lichtwelle mit der zweiten Umlaufrichtung erhaltenen Wechselsignale gleich. Deren Differenz ist null.

Wenn nun aber die Meßvorrichtung beispielsweise eine Drehung um eine zur Ebene des Ringresonators senkrechte Achse ausführt, dann verändern sich die effektiven optischen Weglängen des Ringresonators für die beiden gegensinnig umlaufenden Lichtwellen in entgegengesetztem Sinne. Es verlagern sich daher die Frequenzen, bei denen die Lichtwellen mit der einen und mit der anderen Umlaufrichtung in dem Ringresonator in Resonanz sind, also die phase "0" zeigen. Es kann nun dafür gesorgt werden, daß sich die Frequenz des Lasers auf der der einen Umlaufrichtung entsprechenden Resonanzfrequenz stabilisiert. Dann ist das demodulierte Signal, das aus der Lichtwelle mit der anderen Umlaufrichtung gewonnen wird, ein direktes Maß für die Drehgeschwindigkeit der Meßvorrichtung. Man kann sich vorstellen, daß in Fig. 3 die eine Kurve, z.B. die Kurve 26 unverändert bleibt, so daß ihr Wendepunkt 28 bei der Phase "0" liegt. Diese Phase entspricht eine geänderte Frequenz des Lasers. Die Kurve 24 ist dann gegenüber der Kurve 26 etwas verschoben: einer bestimmten Phase der Lichtwelle mit der zweiten Umlaufrichtung entspricht bei der gleichen Frequenz, auf die sich der Laser stabilisiert hat, eine andere Phase der mit der ersten Umlaufrichtung umlaufenden Lichtwelle und damit ein anderer Intensitäts- bzw. Transmissionsverlauf. Das ist in Fig. 3 gestrichelt angedeutet. Die bei der Frequenz des Lasers, also der Phase "0" der Lichtwelle mit der zweiten Umlaufsinn, aus der Lichtwelle mit der ersten Umlaufrichtung erhaltene Signalamplitude entsprechend punkt 30 in Fig. 3 ist dann unmittelbar ein Maß für die Drehgeschwindigkeit der Meßvorrichtung.

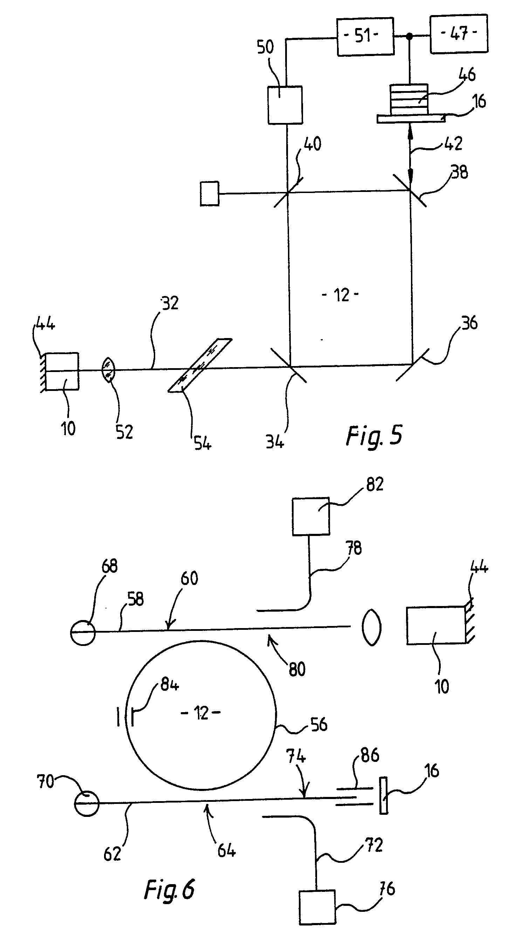

Wenn der Laser 10 in vollständiger Sättigung betrieben wird, hängt das so erhaltene Signal über einen recht großen Bereich linear von der Drehgeschwindigkeit (oder eriner anderen den Ringresonator beeinflussenden Größe) ab. Das ist in Fig. 4 dargestellt.

In Fig. 5 ist schematisch eine Art der praktischen Realisierung des vorstehend beschriebenen Prinzips dargestellt, bei welcher der Ringresonator mit Spiegeln aufgebaut ist. Entsprechende Teile sind in Fig. 5 mit den gleichen Bezugszeichen gekennzeichnet wie in Fig. 1.

Ein Halbleiterlaser 10 erzeugt einen Laserstrahl 32, der in einen Ringresonator 12 eingekoppelt wird. Die ringresonatorseitige Fläche des Halbleiterlasers ist durch eine reflexmindernde Schicht entspiegelt. Der Ringresonator 12 besteht aus vier Spiegeln 34, 36, 38 und 42. Die Spiegel 34, 36, 38 und 40 sind in den Ecken eines Rechtecks angeordnet und um 45° zur Strahlrichtung eines in dem Ringresonator 12 umlaufenden Lichtstrahls geneigt. Auf diese Weise wird der Lichtstrahl an jedem Spiegel um 90° umgelenkt und läuft somit längs der Seiten des Rechtecks. Der Spiegel 34 ist ein teildurchlässiger Spiegel. Dadurch wird ein Teil des von dem Halbleiterlaser ausgesandten Lichtstrahls 32 von dem Spiegel 34 durchgelassen und damit in den Ringresonator eingekoppelt. Der Spiegel 36 ist vollverspiegelt. Der Spiegel 38 ist wieder ein teildurchlässiger Spiegel. Das von dem Spiegel 38 reflektierte Licht fällt auf den Spiegel 40. Der Spiegel 40 ist ebenfalls ein teildurchlässiger Spiegel. Das von dem Spiegel 40 reflektierte Licht fällt auf den Spiegel 34 und wird von diesem wieder jedenfalls teilweise reflektiert in Richtung auf den Spiegel 36. Das von dem Halbleiterlaser 10 in den Ringresonator eingekoppelte Licht durchläuft somit den Ringresonator mit einer ersten Umlaufrichtung, nämlich entgegen dem Uhrzeigersinn in Fig. 5.

Das durch den teildurchlässigen Spiegel 38 hindurchtretende Licht fällt auf einen Endreflektor 16 in Form eines vollverspiegelten Planspiegels, der senkrecht zur Strahlrichtung des durch den Spiegel 38 hindurchtretenden Teillichtbündels ist. Der Endreflektor 16 wirft daher das auftreffende Teillichtbündel 42 wieder in die Einfallsrichtung zurück. Das an dem Endreflektor reflektierte Teillichtbündel 42 tritt wieder teilweise durch den teildurchlässigen Spiegel 38 hindurch und fällt auf den Spiegel 36. Der Spiegel 36 lenkt das Licht um 90° um und leitet es auf den teildurchlässigen Spiegel 34. Der teildurchlässige Spiegel 34 reflektiert einen Teil des vom Spiegel 36 her einfallenden Lichtes in Richtung auf den Spiegel 40. Der Spiegel 40 reflektiert wieder einen Teil des Lichtes auf den Spiegel 38. Der Spiegel 38 reflektiert dieses Licht wieder teilweise in die Richtung des von dem Endreflektor her durchgelassenen Teillichtbündels. Es wird somit von dem Endreflektor her eine umlaufende Lichtwelle in den Ringresonator 12 eingekoppelt, die mit einer zweiten, der ersten Umlaufrichtung entgegengesetzten Umlaufrichtung in dem Ringresonator 12 umläuft. Die zweite Umlaufrichtung entspricht dem Uhrzeigersinn in Fig. 5.

Der Endreflektor 16 hat also einmal die Funktion, in dem Ringresonator eine Lichtwelle zu erzeugen, die mit der zweiten Umlaufrichtung in dem Ringresonator umläuft.

Ein Teil des von dem Spiegel 36 auf den Spiegel 34 reflektierten rücklaufenden Lichtes tritt durch den teildurchlässigen Spiegel 34 hindurch und gelangt zu dem Halbleiterlaser 10. Auf der dem Ringresonator 12 abgewandten Seite des Halbleiterlasers 10 ist eine Verspiegelung 44 vorgesehen. Diese Verspiegelung 44 begrenzt zusammen mit dem Endreflektor 16 den Resonanzhohlraum des Halbleiterlasers 10.

Der Endreflektor 16 hat also zum anderen die Funktion der Begrenzung des Resonanzhohlraumes des Halbleiterlasers 10.

Der Endreflektor sitzt bei der Ausführung nach Fig. 5 auf einem Stellglied 46, das durch ein elektrisches Signal in Strahlrichtung längenveränderlich ist. Dieses Stellglied ist bei der bevorzugten Ausführungsform nach Fig. 5 ein Piezoversteller. Das Stellglied 46 ist von einem Modulationssignal beaufschlagt. Das Stellglied 46 und der den Endreflektor 16 bildende Spiegel stellen daher Teile von Modulationsmitteln zur Modulation, nämlich zur Phasenmodulation, des Laserlichtes dar.

Der Endreflektor 16 hat daher bei der Ausführung nach Fig. 5 noch eine dritte Funktion: Er bewirkt zusammen mit dem Stellglied 46 eine Phasenmodulation des Lichtes.

Der durch den Spiegel 40 hindurchtretende Anteil des in der ersten Umlaufrichtung in dem Ringresonator umlaufenden Lichtes fällt auf einen ersten photoelektrischen Detektor 48. Der durch den Spiegel 40 hindurchtretende Anteil des in der zweiten Umlaufrichtung in dem Ringresonator umlaufenden Lichtes fällt auf einen zweiten photoelektrischen Detektor 50. Das Signal des Detektors 50, das der modulierten Intensität des Lichtes mit der zweiten Umlaufrichtung entspricht, ist auf einen Regler 51 geschaltet. Als Eingangsgröße des Reglers dient die Komponente des Detektorsignals mit der Frequenz der Phasenmodulation. Die Ausgangsgröße des Reglers ist eine Gleichspannung, die an dem Stellglied 46 anliegt und eine feste, der Phasenmodulationsschwingung überlagerte-Verstellung des Endreflektors bewirkt. Der Halbleiterlaser 10 wird dasurch abgestimmt auf die Resonanzfrequenz des mit der zweiten Umlaufrichtung in dem Resonanzhohlraum umlaufenden Lichtes.

Im Strahlengang des von dem Halbleiterlaser 10 ausgesandten Lichtbündels 32 sind eine Kollimatoroptik 52 sowie ein Etalon 54 angeordnet. Das Etalon hat den Zweck, ein Arbeiten des Halbleiterlasers in nur einem Mode sicherzustellen. Halbleiterlaser sind, wie oben schon erwähnt wurde, sehr breitbandig. Infolgedessen können mehrere der Resonanzfrequenzen des Ringresonators mit dem Laser in Resonanz kommen. Durch das Etalon wird von diesen Resonanzfrequenzen eine bestimmte ausgewählt. Es können stattdessen auch andere Filtermittel vorgesehen werden. Beispielsweise kann der dem Ringresonator abgewandte Endreflektor 44 durch ein Gitter ersetzt werden, das von den verschiedenen Resonanzfrequenzen des Ringresonators 12 nur eine in die Einfallsrichtung zurückwirft.

Fig. 6 zeigt eine Meßanordnung, die mit integrierter Optik aufgebaut ist, bei welcher also zur Führung des Lichtes Wellenleiter in ein Substrat eingebettet sind.

Mit 10 ist in Fig. 6 wieder ein Halbleiterlaser bezeichnet. Der Ringresonator 12 ist ein von einem geschlossenen, kreisförmigen Wellenleiter 56 gebildeter, integrierter optischer Resonator. Auf der einen Seite dieses geschlossenen Wellenleiters 56 ist ein gerader Laser- Wellenleiter 58 angeordnet. Der Laser- Wellenleiter 56 verläuft im wesentlichen tangential zu dem geschlossenen Wellenleiter 56 in geringem Abstand von diesem. Dadurch ist der Laser- Wellenleiter 56 mit dem geschlossenen Wellenleiter 56 optisch gekoppelt. Ein Teil des in dem Laser-Wellenleiter 58 geleiteten Lichtes geht an einer Koppelstelle 60 in den geschlossenen Wellenleiter 56 über und umgekehrt. Auf der anderen Seite des geschlossenen Wellenleiters 56 ist ein Endreflektor-Wellenleiter 62 angeordnet. Der Endreflektor-Wellenleiter 62 ist ebenfalls an einer Koppelstelle 64 mit dem geschlossenen Wellenleiter 56 optisch gekoppelt. Der Laser-Wellenleiter 58 ist über eine Einkoppeloptik 66 von dem Laserstrahl des Halbleiterlasers 10 beaufschlagt. Ein Endreflektor 16 ist so zu dem Endreflektor- Wellenleiter 62 angeordnet, daß das aus dem geschlossenen Wellenleiter in den Endreflektor-Wellenleiter ausgekoppelte Licht einer ersten Umlaufrichtunges von dem Endreflektor 16 wieder in den Endreflektor- Wellenleiter zurückgeworfen und teilweise in einer zweiten, entgegengesetzten Umlaufrichtung wieder in den geschlossenen Wellenleiter eingekoppelt wird.

Es wird also Licht von dem Halbleiterlaser 12 von rechts nach links in Fig. 6 auf den Laser Wellenleiter 58 geleitet. Dieses Licht wird teilweise in den geschlossenen Wellenleiter 56 eingekoppelt. Dieses Licht läuft dann mit einer ersten Umlaufrichtung in dem geschlossenen Wellenleiter um, nämlich entgegen dem Uhrzeigersinn in Fig. 6. Ein Teil des so entgegen dem Uhrzeigersinn umlaufenden Lichtes wird an der Koppelstelle 64 in den Endreflektor- Wellenleiter 62 eingekoppelt. Es läuft dann von links nach rechts in Fig. 6 in dem Endreflektor-Wellenleiter 62 zu dem Endreflektor 16. Das von dem Endreflektor 16 zurückgeworfene Licht läuft in dem Endreflektor-Wellenleiter 62 von rechts nach links zurück, wird an der Koppelstelle 64 wieder teilweise in den geschlossenen Wellenleiter 56 eingekoppelt und durchläuft den geschlossenen Wellenleiter 56 jetzt in der zweiten Umlaufrichtung, nämlich im Uhrzeigersinn von Fig. 6. Von diesem Licht wird wieder ein Teil an der Koppelstelle 62 in den Laser- Wellenleiter 58 eingekoppelt und läuft zu dem Halbleiterlaser 10 zurück. Auf der dem Ringresonator 12 abgewandten Seite des Halbleiterlasers 10 ist eine Verspiegelung 44 angebracht.

Auf diese Weise hat der Endreflektor 16 wieder die Funktion der Erzeugung einer mit der zweiten Umlaufrichtung in dem Ringresonator 12 umlaufenden Lichtwelle. Er hat weiter die Funktion der Begrenzung des Resonanzhohlraumes zusammen mit der Verspiegelung 44. Der Halbleiterlaser 12 wird auf die Frequenz des mit der zweiten Umlaufrichtung umlaufenden Lichtes abgestimmt. Insoweit ist die Wirkungsweise der Meßvorrichtung von Fig. 6 ähnlich der von Fig. 5.

An seinem dem Halbleiterlaser 12 abgewandten Ende ist der Laser- Wellenleiter 58 mit einer Lichtfalle 68 verbunden. Diese verhindert, daß das von dem Halbleiterlaser 12 auf den Laser-Wellenleiter 58 geleitete Licht, das nicht in den geschlossenen Wellenleiter 56 eingekoppelt wird, an dem besagten Ende reflektiert wird. Ebenso ist der Endreflektor- Wellenleiter 62 an seinem dem Endreflektor 16 abgewandten Ende mit einer Strahlenfalle 70 verbunden.

Mit dem Endreflektor- Wellenleiter 62 ist zwischen dem Ort der optischen Kopplung mit dem geschlossenen Wellenleiter 56 (Koppelstelle 64) und dem Endreflektor 16 ein erster Detektor-Wellenleiter 72 an einer Koppelstelle 74 optisch gekoppelt. Dieser erste Detektor- Wellenleiter 72 führt zu einem ersten photoelektrischen Detektor 76. Die optische Kopplung an der Koppelstelle 74 ist so, daß durch den ersten Detektor- Wellenleiter 62 ein Teil des von dem geschlossenen Wellenleiter in Richtung auf den Endreflektor 16 geleiteten Lichts, das den geschlossenen Wellenleiter mit der ersten Umlaufrichtung durchlaufen hat, auf den ersten Detektor 76 geleitet wird. Mit dem Laser- Wellenleiter ist zwischen dem Ort der optischen Kopplung mit dem geschlossenen Wellenleiter (Koppelstelle 60) und dem Halbleiterlaser 10 ein zweiter Detektor- Wellenleiter 78 an einer Koppelstelle 80 optisch gekoppelt. Dieser zweite Detektor- Wellenleiter 78 führt zu einem zweiten photoelektrischen Detektor 82. Die optische Kopplung an der Koppelstelle 80 ist so, daß durch den zweiten Detektor- Wellenleiter ein Teil des von dem geschlossenen Wellenleiter 56 über den Laser- Wellenleiter in Richtung auf den Halbleiterlaser 12 geleiteten Lichtes auf den zweiten Detektor 82 geleitet wird.

Ein erster Phasenmodulator 84 ist an dem geschlossenen Wellenleiter 56 vorgesehen. Ein zweiter phasenmodulator 86 ist an dem Endreflektor- Wellenleiter 62 zwischen der Koppelstelle 64 und dem Endreflektor 16 vorgesehen. Der Phasenmodulator 86 von Fig. 6 wirkt genau so wie die Bewegung des Endreflektors 16 durch das Stellglied 44 bei der Ausführung nach Fig. 5. Auch bei der Meßvorrichtung von Fig. 6 wird der Halbleiterlaser 12 auf die Frequenz der in der zweiten Umlaufrichtung in dem Ringresonator umlaufenden Lichtwelle abgestimmt. Durch die Phasenmodulation werden Wechselsignale der Detektoren 76 und 82 mit der Modulationsfrequenz erzeugt. Diese Wechselsignale hängen nach den Kurven 20 und 22 von den optischen Weglängen in dem geschlossenen Wellenleiter 56 ab.

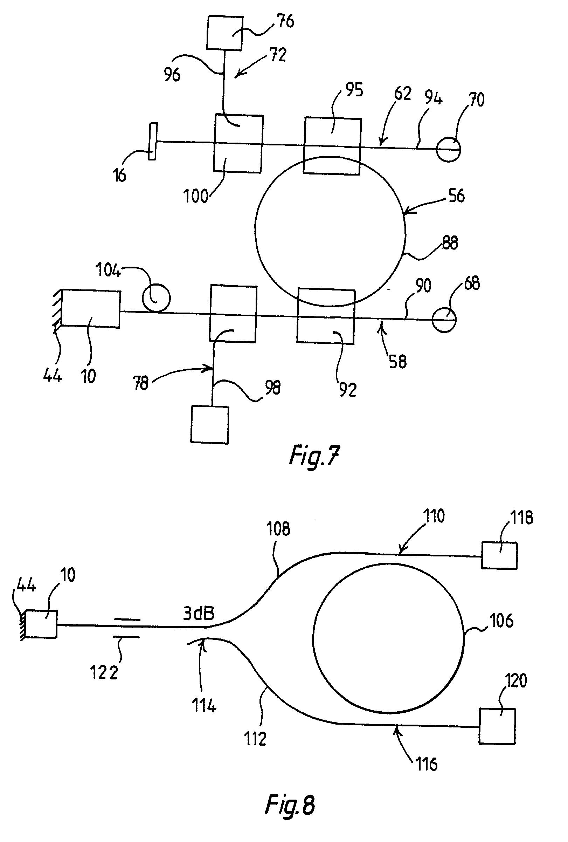

Fig. 7 zeigt eine Meßvorrichtung, bei welcher das Licht durch Fasern als Wellenleitern geleitet wird. Der Aufbau der Meßvorrichtung von Fig. 7 ist ähnlich dem von Fig. 6. Entsprechende Teile sind in Fig. 7 mit den gleichen Bezugszeichen gekennzeichnet wie in Fig. 6.

Der Ringresonator 12 enthält als geschlossenen Wellenleiter 56 einen geschlossenen, lichtleitenden Faserring 88. Der Laser- Wellenleiter 58 ist von einer lichtleitenden Faser 90 gebildet. Die Faser 90 ist über einen Faserkoppler 92 mit dem Faserring 88 optisch gekoppelt. Auch der Endreflektor- Wellenleiter 62 ist von einer lichtleitenden Faser 94 gebildet. Die Faser 94 ist über einen Faserkoppler 96 mit dem Faserring 88 optisch gekoppelt. Auch der erste und der zweite Detektor- Wellenleiter 72 bzw. 78 sind von je einer lichtleitenden Faser 96 bzw. 98 gebildet, die mittels je eines Faserkopplers 100 bzw. 102 mit dem Faserring 56 optisch gekoppelt sind. Jede der Fasern 96 und 98 leiten Licht zu einem der Detektoren 76 bzw. 82. Der Faserkoppler 100 ist zwischen dem Faserkoppler 96 und dem Endreflektor 16 angeordnet. Der Faserkoppler 102 ist zwischen dem Faserkoppler 92 und dem Halbleiterlaser 10 angeordnet. Die Faserkoppler 100 und 102 sind so angeordnet, daß sie jeweils einen Anteil des aus dem Faserring 88 in den Endreflektor- Wellenleiter 62 bzw. den Laser- Wellenleiter 58 eingekoppelten Lichtes auf die Detektor- Wellenleiter 72 bzw. 78 und damit auf die Detektoren 76 bzw. 82 leiten.

Ein Phasenmodulator 104 ist bei der Anordnung nach Fig. 7 zwischen dem Halbleiterlaser 10 und dem Faserkoppler 102 in dem Laser- Wellenleiter 58 angeordnet.

Die Wirkungsweise der Meßvorrichtung nach Fig.7 ist im wesentlichen die gleiche wie die Wirkungsweise der Meßvorrichtung nach Fig. 6.

Fig. 8 zeigt eine abgewandelte Ausführung der Meßvorrichtung, bei welcher der Endreflektor entfallen kann.

Bei der Meßvorrichtung nach Fig. 8 enthält der Ringresonator 12 einen geschlossenen Wellenleiter 106. Es kann sich dabei um einen als integrierte Optik hergestellten Wellenleiter nach Art von Fig. 6 oder um einen Faserring ähnlich Fig. 7 handeln. Ein erster Wellenleiter 108 ist von dem Laserstrahl des Halbleiterlasers 10 beaufschlagt. Der erste Wellenleiter 108 ist auf einer Seite des geschlossenen Wellenleiters 106 über eine Koppelstelle oder einen Faserkoppler 110 mit diesem geschlossenen Wellenleiter 106 optisch gekoppelt. Dadurch wird eine mit einer ersten Umlaufrichtung, nämlich im Uhrzeigersinn in Fig. 8, in dem geschlossenen Wellenleiter 106 umlaufende Lichtwelle erzeugt. Ein zweiter Wellenleiter 112 ist mit dem ersten Wellenleiter 108 über eine Koppelstelle oder einen Faserkoppler 114 optisch gekoppelt. Die Koppelstelle oder der Faserkoppler 114 ist zwischen dem Halbleiterlaser 10 und dem Ort der optischen Kopplung von erstem Wellenleiter 108 und geschlossenem Wellenleiter 106, also der Koppelstelle oder dem Faserkoppler 110, angeordnet. Auf diese Weise wird das von dem Laser ausgehende Licht in zwei Teillichtströme aufgeteilt, von denen der eine in dem ersten Wellenleiter 108 und der andere in dem zweiten Wellenleiter 112 läuft. Der zweite Wellenleiter 112 ist auf der dem ersten Wellenleiter 108 gegenüberliegenden Seite über eine Koppelstelle oder einen Faserkoppler 116 mit dem geschlossenen Wellenleiter 106 optisch gekoppelt, derart daß eine mit der zweiten Umlaufrichtung in dem geschlossenen Wellenleiter 106 umlaufende Lichtwelle erzeugt wird.

Der erste und der zweite Wellenleiter 108 bzw. 112 sind jeweils tangential zu dem geschlossenen Wellenleiter 106 angeordnet. Dadurch wird das Licht mit der ersten Umlaufrichtung sowohl von dem Halbleiterlaser 10 über den ersten Wellenleiter 108 in den geschlossenen Wellenleiter 106 eingekoppelt als auch von dem geschlossenen Wellenleiter 106 in den ersten Wellenleiter 108 ausgekoppelt. In gleicher Weise wird das Licht mit der zweiten Umlaufrichtung sowohl von dem Halbleiterlaser 10 über den zweiten Wellenleiter 112 in den geschlossenen Wellenleiter 106 eingekoppelt als auch von dem geschlossenen Wellenleiter 106 in den zweiten Wellenleiter 112 ausgekoppelt. An dem dem Halbleiterlaser 10 abgewandten Ende des ersten Wellenleiters 108 ist ein erster photoelektrischer Detektor 118 angeordnet. An dem dem Halbleiterlaser 10 abgewandten Ende des zweiten Wellenleiters 112 ist ein zweiter photoelektrischer Detektor 120 angeordnet.

In dem Teil des ersten Wellenleiters 108 zwischen dem Halbleiterlaser 10 und dem Ort der optischen Kopplung mit dem zweiten Wellenleiter 112 ist ein phasenmodulator 122 vorgesehen.

Bei dieser Anordnung fällt ein zusätzliches optisches Element, nämlich der Endreflektor weg. Die Ringresonanzen beider Umlaufrichtungen werden symmetrisch angeregt.

Die beschriebenen Meßvorrichtungen können prinzipiell auch in der Weise aufgebaut werden, daß äußere Modulatoren entfallen und dafür der Halbleiterlaser 10 direkt moduliert wird. Halbleiterlaser können sehr hochfrequent über die Steuerung ihres Injektionsstromes moduliert werden. Das kann vorteilhaft sein, wenn die Bandbreite des externen Modulators für das gewünschte Detektionsverfahren nicht ausreicht. Die Abstimmung auf den Ringresonator kann durch Variation des Biasstromes des Halbleiterlasers vorgenommen werden.

**Patentansprüche**

1. Meßvorrichtung mit einem Laser (10) und einem Ringresonator (12) zur Messung einer physikalischen Größe, durch welche die optischen Weglängen des Ringresonators (12) für Lichtwellen, die mit entgegengesetzten Umlaufrichtungen in dem Ringresonator (12) laufen, gegensinnig veränderbar sind, enthaltend:

(a) einen passiven Ringresonator (12) mit einer ersten und einer zweiten Umlaufrichtung des Lichts,

(b) einen außerhalb des Ringresonators angeordneten Laser (10), der mit dem Ringresonator (12) zur Erzeugung einer mit der ersten Umlaufrichtung in dem Ringresonator (12) umlaufenden Lichtwelle und einer mit der zweiten Umlaufrichtung umlaufenden Lichtwelle optisch gekoppelt ist,

(c) Modulationsmittel zur Modulation des Laserlichtes

(d) wobei die optischen Weglängen für die in dem Ringresonator (12) mit der ersten Umlaufrichtung umlaufende Lichtwelle und die in dem Ringresonator (12) mit der zweiten Umlaufrichtung umlaufende Lichtwelle von der besagten physikalischen Größe unterschiedlich beeinflußt sind, und

(e) eine Detektoreinrichtung mit einem ersten Detektor (48), welcher von aus dem Ringresonator (12) ausgekoppeltem Licht von der mit der ersten Umlaufrichtung umlaufenden Lichtwelle beaufschlagt ist, und mit einem zweiten Detektor (50), welcher von aus dem Ringresonator ausgekoppeltem Licht von der mit der zweiten Umlaufrichtung umlaufenden Lichtwellen beaufschlagt ist, dadurch gekennzeichnet, daß

(f) der Ringresonator (12) optisch unisoliert mit dem Laser (10) gekoppelt ist und einen Teil der Resonanzhohlraumes des Lasers (10) bildet

(g) durch die Modulatormittel (46) die optische Weglänge des Resonanzhohlraumes zur Phasenmodulation des in dem Resonanzhohlraum umlaufenden Lichtes mit einer Modulationsfrequenz moduliert ist,

(h) durch das das Signal des zweiten Detektors (50) über Regelmittel (51), die als Eingangsgröße von einer Komponente des Signals mit der Modulationsfrequenz beaufschlagt sind, ein Stellglied (46) ansteuerbar ist, durch welches die optische Weglänge des Resonanzhohlraumes so verstellbar ist, daß in dem Signal des zweiten Detektors (50) die Komponente mit der Phasenmodulationsfrequenz null wird, wobei der Laser auf die so geregelte Resonanzfrequenz des mit der zweiten Umlaufrichtung unlaufenden Lichts abgestimmt wird, und

(i) das mit der Modulationsfrequenz modulierte Signal des zweiten Detektors als Maß für die zu messende Größe ausgebbar ist.

2. Meßvorrichtung nach Anspruch 1, dadurch gekennzeichnet, daß

(a) der Resonanzhohlraum des Lasers (10) ringresonatorseitig durch einen Endreflektor (16) begrenzt ist und

(b) der besagte Endreflektor (16) des Lasers (10) optisch auf der dem Laser (10) abgewandten Seite des Ringresonators (12) angeordnet ist, so daß

die von dem Laser (10) ausgesandte Lichtwelle den Ringresonator (12) mit der ersten Umlaufrichtung durchläuft und auf den Endreflektor (16) trifft und

die von dem Endreflektor (16) reflektierte Lichtwelle den Ringresonator (12) mit der entgegengesetzten, zweiten Umlaufrichtung durchläuft.

3. Meßvorrichtung nach Anspruch 1 oder 2, dadurch gekennzeichnet, daß der Laser (10) ein Halbleiterlaser ist, der ringresonatorseitig durch reflexmindernde Mittel entspiegelt ist.

4. Meßvorrichtung nach Anspruch 3, dadurch gekennzeichnet, daß in dem Resonanzhohlraum Filtermittel vorgesehen sind, welche auf eine der verschiedenen Resonanzfrequenzen des Ringresonators abgestimmt sind.

5. Meßvorrichtung nach Anspruch 4, dadurch gekennzeichnet, daß die Filtermittel von einem Etalon gebildet sind.

6. Meßvorrichtung nach Anspruch 4, dadurch gekennzeichnet daß, als Filtermittel der dem Ringresonator abgewandte Endreflektor (44) als Gitter ausgebildet ist, welches eine der verschiedenen Resonanzfrequenzen des Ringresonators in die Einfallsrichtung zurückwirft.

7. Meßvorrichtung nach einem der Ansprüche 2 bis 6, dadurch gekennzeichnet, daß

(a) der Ringresonator (12) vier in den Ecken eines Rechtecks angeordnete, zur Strahlrichtung geneigte Spiegel (34, 36, 38, 40) aufweist, durch welche das Licht in der ersten und in der zweiten Umlaufrichtung längs einer geschlossenen Bahn geführt ist,

(b) ein erster dieser Spiegel (34), der dem Laser (10) benachbart ist, für den Eintritt des Laserstrahls (32) in den Ringresonator (12) teildurchlässig ausgebildet ist,

(c) ein zweiter dieser Spiegel (38) teildurchlässig ausgebildet ist,

(d) der Endreflektor (16) von dem den Ringresonator (12) in der ersten Umlaufrichtung durchlaufenden durch den zweiten Spiegel (38) hindurchtretenden Licht beaufschlagt ist und dieses in die Einfallsrichtung zurückwirft so daß ein Teil dieses zurückgeworfenen Lichts wieder durch den zweiten teildurchlässigen Spiegel (38) hindurchtritt und den Ringresonator (12) in der zweiten Umlaufrichtung durchläuft.

8. Meßvorrichtung nach Anspruch 7, dadurch gekennzeichnet, daß

(a) der Endreflektor (16) ein senkrecht zur Strahlrichtung angeordneter Spiegel ist,

(b) dieser Spiegel auf einem Stellglied (46) angeordnet ist, das durch ein elektrisches Signal in Strahlrichtung längenveränderlich ist, und

(c) das Stellglied (46) von einem Modulationssignal beaufschlagt ist, wobei das Stellglied (46) und der den Endreflektor (16) bildende Spiegel Teile der besagten Modulationsmittel zur Modulation des Laserlichts darstellen.

9. Meßvorrichtung nach Anspruch 8, dadurch gekennzeichnet, daß

(a) ein Regler (51) vorgesehen ist, der von dem Signal des Detektors (50) beaufschlagt ist, auf den Licht fällt, das den Ringresonator in der zweiten Umlaufrichtung durchlaufen hat,

(b) durch den Regler (51) ein Gleichspannungssignal auf das Stellglied (46) aufschaltbar ist, derart, daß in dem Signal des Detektors (50) die Komponente mit der Phasenmodulationsfrequenz auf null geregelt wird.

10. Meßvorrichtung nach einem der Ansprüche 7 bis 9, dadurch gekennzeichnet, daß

(a) ein dritter der den Ringresonator (12) bildenden Spiegel (40) teildurchlässig ist, wobei ein Teil des in der ersten Umlaufrichtung umlaufenden Lichts in einem ersten Teilstrahl und ein Teil des in der zweiten Umlaufrichtung umlaufenden Lichts in einem zweiten Teilstrahl durch den dritten teildurchlässigen Spiegel (40) hindurchtritt,

(b) das Licht des ersten Teilstrahls auf den ersten Detektor (48) fällt und

(c) das Licht des zweiten Teilstrahls auf den zweiten Detektor (50) fällt, wobei die beiden Detektoren (48, 50) Teile der besagten Detektoreinrichtung bilden, welche auf die Unterschiede der mit der ersten und der zweiten Umlaufrichtung umlaufenden Lichtwellen anspricht.

11. Meßvorrichtung nach Anspruch 2, dadurch gekennzeichnet, daß

(a) der Ringresonator (12) ein geschlossener Wellenleiter (56) ist,

(b) auf der einen Seite dieses geschlossenen Wellenleiters (56) ein Laser-Wellenleiter (58) angeordnet und mit dem besagten geschlossenen Wellenleiter (56) optisch gekoppelt ist, der von dem Laserstrahl eines Lasers (10) beaufschlagt ist,

(c) auf der anderen Seite dieses geschlossenen Wellenleiters (56) ein Endreflektor-Wellenleiter (62) angeordnet und mit dem geschlossenen Wellenleiter (56) optisch gekoppelt ist,

(d) der Endreflektor (16) so zu dem Endreflektor-Wellenleiter (62) angeordnet ist, daß das aus dem geschlossenen Wellenleiter in den Endreflektor-Wellenleiter (62) ausgekoppelte Licht der ersten Umlaufrichtunges von dem Endreflektor (16) wieder in den Endreflektor-Wellenleiter (62) zurückgeworfen und teilweise in der zweiten Umlaufrichtung wieder in den geschlossenen Wellenleiter (56) eingekoppelt wird.

12. Meßvorrichtung nach Anspruch 8, dadurch gekennzeichnet, daß

(a) der geschlossene Wellenleiter (56) ein integrierter optischer Resonator ist und

(b) der Laser-Wellenleiter (58) von dem Laserstrahl des Lasers (10) über eine Einkoppeloptik (66) beaufschlagt ist.

13. Meßvorrichtung nach Anspruch 13, dadurch gekennzeichnet, daß

(a) ein erster Phasenmodulator (84) an dem geschlossenen Wellenleiter (56) vorgesehen ist und/oder

(b) ein zweiter Phasenmodulator (86) an dem Endreflektor-Wellenleiter (62) zwischen dem Ort der optischen Kopplung mit dem geschlossenen Wellenleiter (58) und dem Endreflektor (16) vorgesehen ist.

14. Meßvorrichtung nach Anspruch 11 oder 12, dadurch gekennzeichnet, daß an den dem Laser (10) bzw. dem Endreflektor (16) gegenüberliegenden Enden des Laser-Wellenleiters (58) bzw. des Endreflektor- Wellenreflektors (62) Lichtfallen (68, 70) angeordnet sind.

15. Meßvorrichtung nach einem der Ansprüche 11 bis 14, dadurch gekennzeichnet, daß

(a) mit dem Endreflektor-Wellenleiter (62) zwischen dem Ort der optischen Kopplung mit dem geschlossenen Wellenleiter (58) und dem Endreflektor (16) ein erster Detektor-Wellenleiter (72) optisch gekoppelt ist, durch welchen ein Teil des von dem geschlossenen Wellenleiter (56) in Richtung auf den Endreflektor (16) geleiteten Lichtes, das den geschlossenen Wellenleiter (56) mit der ersten Umlaufrichtung durchlaufen hat, auf einen ersten Detektor (76) geleitet wird

(b) mit dem Laser-Wellenleiter (58) zwischen dem Ort der optischen Kopplung mit dem geschlossenen Wellenleiter (56) und dem Laser (10) ein zweiter Detektor-Wellenleiter (78) optisch gekoppelt ist, durch welchen ein Teil des von dem geschlossenen Wellenleiter (56) über den Laser-Wellenleiter (58) in Richtung auf den Laser (10) geleiteten Lichts auf einen zweiten Detektor (82) geleitet wird.

16. Meßvorrichtung nach Anspruch 11, dadurch gekennzeichnet, daß

(a) der geschlossene Wellenleiter (56) von einem lichtleitenden Faserring (88) gebildet ist,

(b) der Laser-Wellenleiter (58) on einer lichtleitenden Faser (90) gebildet ist die über einen Faserkoppler (92) mit dem Faserring (88) optisch gekoppelt ist,

(c) der Endreflektor-Wellenleiter (62) on einer lichtleitenden Faser (94) gebildet ist, die über einen Faserkoppler (96) mit dem Faserring (88) optisch gekoppelt ist.

17. Meßvorrichtung nach den Ansprüchen 15 und 16, dadurch gekennzeichnet, daß der erste und der zweite Detektor-Wellenleiter (72, 78) von je einer lichtleitenden Faser (96, 98) gebildet sind, die mittels je eines Faserkopplers (100, 102) mit dem Faserring (88) optisch gekoppelt ist.

18. Meßvorrichtung nach Anspruch 17, dadurch gekennzeichnet, daß an der den Laser-Wellenleiter (58) bildenden Faser (90) zwischen dem Laser (10) und dem Faserkoppler (92) zur optischen Kopplung des Laser-Wellenleiters (58) mit dem Faserring (88) ein weiterer Faserkoppler (102) zur optischen Kopplung dieser Faser (90) mit der den zweiten Detektor-Wellenleiter (78) bildenden Faser (98) vorgesehen ist.

19. Meßvorrichtung nach Anspruch 17, dadurch gekennzeichnet, daß an der den Endreflektor-Wellenleiter (62) bildenden Faser (94) zwischen dem Endreflektor (16) und dem Faserkoppler (96) zur optischen Kopplung des Endreflektor-Wellenleiters (62) mit dem Faserring (88) ein weiterer Faserkoppler (100) zur optischen Kopplung dieser Faser (94) mit der den ersten Detektor-Wellenleiter (72) bildenden Faser (96) vorgesehen ist.

20. Meßvorrichtung nach Anspruch 1, dadurch gekennzeichnet, daß

(a) der Ringresonator (12) einen geschlossenen Wellenleiter (106) enthält,

(b) ein erster Wellenleiter (108) von dem Laserstrahl des Lasers (10) beaufschlagt und auf einer Seite des geschlossenen Wellenleiters (106) mit diesem optisch gekoppelt ist, so daß eine mit der ersten Umlaufrichtung in dem geschlossenen Wellenleiter (106) umlaufende Lichtwelle erzeugt wird,

(c) ein zweiter Wellenleiter (112) mit dem ersten Wellenleiter (108) zwischen dem Laser (10) und dem Ort der optischen Kopplung von erstem Wellenleiter (108) und geschlossenem Wellenleiter (106) mit dem ersten Wellenleiter (108) optisch gekoppelt ist,

(d) der zweite Wellenleiter (112) auf der dem ersten Wellenleiter (108) gegenüber-liegenden Seite mit dem geschlossenen Wellenleiter (106) optisch gekoppelt ist, so daß eine mit der zweiten Umlaufrichtung in dem geschlossenen Wellenleiter (106) umlaufende Lichtwelle erzeugt wird.

21. Meßvorrichtung nach Anspruch 20 dadurch gekennzeichnet, daß

(a) der erste und der zweite Wellenleiter (108, 112) jeweils tangential zu dem geschlossenen Wellenleiter (106) angeordnet sind, so daß das Licht mit der ersten Umlaufrichtung sowohl von dem Laser (10) über den ersten Wellenleiter (106) eingekoppelt als auch von dem geschlossenen Wellenleiter (106) in den ersten Wellenleiter (108) ausgekoppelt wird und das Licht mit der zweiten Umlaufrichtung sowohl von dem Laser (10) über den zweiten Wellenleiter (112) in den geschlossenen Wellenleiter (106) eingekoppelt als auch von dem geschlossenen Wellenleiter (106) in den zweiten Wellenleiter (112) ausgekoppelt wird, und

(b) je ein Detektor (118, 120) an den dem Laser (10) abgewandten Enden des ersten und zweiten Wellenleiters (108, 112) angeordnet ist.

22. Meßvorrichtung nach Anspruch 21, dadurch gekennzeichnet, daß ein Phasenmodulator (122) in dem Teil des ersten Wellenleiters (108) zwischen dem Laser (10) und dem Ort der optischen Kopplung mit dem zweiten Wellenleiter (112) vorgesehen ist.

## Revendications

1. Dispositif de mesure comprenant un laser (10) et un résonateur annulaire (12) déstiné à mesurer une grandeur physique par laquelle les trajets optiques du résonateur annulaire (12) pour des ondes lumineuses se déplacant dans la direction de déplacement rotatif inverse dans le résonateur annulaire (12), sont variable en sens inverse, comprenant:

(a) un résonateur annulaire passif (12) avec un premier et un second direction de déplacement rotatif de la lumière,

(b) un laser disposé au dehors du résonateur annulaire optiquement couplé au résonateur annulaire (12) afin d'engendrer une onde lumineuse se déplacant dans la première direction de déplacement rotatif dans la résonateur annulaire (12) et une onde lumineuse rotative au second direction de déplacement rotatif,

(c) des moyens de modulation déstinés à la modulation de la lumière du laser,

(d) les trajets optiques pour l'onde lumineuse se déplacant dans le résonateur annulaire dans la première direction de déplacement rotatif et l'onde lumineuse se déplacant dans la seconde direction de déplacement rotatif, étant influencés différemment par ladite grandeur physique, et

(e) un dispositif détecteur ayant un premier détecteur (48) auquel est appliqué la lumière de l'onde lumineuse se déplacant dans la première direction de déplacement rotatif, qui est couplé hors du résonateur annulaire (12), et un second détecteur (50) auquel est appliqué la lumière de l'onde lumineuse se déplacant dans la seconde direction de déplacement rotatif, qui est couplé hors du résonateur annulaire,

caractérisé par le fait que

(f) le résonateur annulaire (12) est couplé de manière optiquement non isolée au laser (10) et forme une partie de la cavité résonatrice du laser (10),

(g) le trajet optique de la cavité résonatrice est modulé par les moyens modulateurs (46) à une fréquence de modulation pour la modulation de phase de la lumière se déplacant rotativement dans la cavité résonatrice,

(h) un vérin (46) est commandable par le signal du second détecteur (50) par des moyens régulateurs (51) auquel est appliquée, en tant que grandeur d'entrée, une composante du signal à la fréquence de modulation, le trajet optique de la cavité résonatrice étant ajustable par le vérin de sorte que dans le signal du second détecteur (50) la composante à la fréquence de modulation de phase est amenée à zéro, le laser étant accordé à la fréquence de résonance ainsi réglée de la lumière se déplacant dans la seconde direction de déplacement rotatif, et

(i) le signal du second détecteur, modulé à la fréquence de modulation peut être sorti comme mesure pour la grandeur à mesurer.

2. Dispositif de mesure selon la revendication 1, caractérisé par le fait que

(a) la cavité résonatrice du laser (10) est limitée du côté du résonateur annulaire par un réflecteur d'extrémité (16), et

(b) ledit réflecteur d'extrémité (16) du laser (10) est optiquement disposé sur le résonateur annulaire sur le côté opposé au laser (10) de sorte que

— l'onde lumineuse émise par le laser (10) parcourt le résonateur annulaire (12) dans la première direction de déplacement rotatif et tombe sur le réflecteur d'extrémité (16), et

— l'onde lumineuse réfléchie par le réflecteur d'extrémité (16) parcourt le résonateur annulaire (12) dans la seconde direction de déplacement rotatif inverse.

3. Dispositif de mesure selon la revendication 1 ou 2, caractérisé par le fait que le laser est un laser semi-conducteur bleuté du côté du résonateur annulaire par des moyens réduisant la réflexion.

4. Dispositif de mesure selon la revendication 3, caractérisé par le fait que des moyens de filtre, qui sont accordés à l'une des différentes fréquences de résonance du résonateur annulaire, ont été prévus.

5. Dispositif de mesure selon la revendication 4, caractérisé par le fait que les moyens de filtre sont formés par un étalon.

6. Dispositif de mesure selon la revendication 4, caractérisé par le fait que comme moyens de filtre le réflecteur d'extrémité (44) opposé au résonateur annulaire est formé comme réseau réfléchissant l'une des différentes fréquences de résonance du résonateur annulaire dans la direction d'incidence.

7. Dispositif de mesure selon l'une des revendications 2 à 6, caractérisé par le fait que

(a) le résonateur annulaire (12) a quatre miroirs (34, 36, 38, 40) disposés dans les coins d'un rectangle et inclinés vers la direction du faisceau et par lesquels la lumière dans le premier et le second direction de déplacement rotatif est guidée le long d'un trajet fermé,

(b) un premier miroir (34) adjacent au laser (10) est semi-transparent pour l'entrée du faisceau laser (32) dans le résonateur annulaire (12),

(c) un second de ces miroirs (38) est formé semi-transparent,

(d) la lumière parcourant le résonateur annulaire (12) dans le premier direction de déplacement rotatif et passant par le second miroir (38) est appliqué au réflecteur d'extrémité (16) qui la réfléchit de sorte qu'une partie de cette lumière réfléchie passe de nouveau par le second miroir (38) semi-transparent et parcourt le résonateur annulaire dans la second direction de déplacement rotatif.

8. Dispositif de mesure selon la revendication 7, caractérisé par le fait que

(a) le réflecteur d'extrémité (16) est un miroir disposé perpendiculairement sur la direction de faisceau,

(b) ce miroir est disposé sur un vérin (46) variable en longueur en direction de faisceau par un signal électrique,

(c) un signal de modulation est appliqué au vérin (46), ce vérin (46) et le miroir formant le réflecteur d'extrémité (16) représentant des parties desdits moyens de modulation déstinés à la modulation de la lumière laser.

9. Dispositif de mesure selon la revendication 8, caractérisé par le fait que

(a) un régulateur (51) est prévu, auquel est appliqué le signal du détecteur (50), sur lequel tombe la lumière qui a parcouru le résonateur annulaire dans le second direction de déplacement rotatif,

(b) un signal à tension continue peut être appliqué au vérin (46) par le régulateur (51) de sorte que dans le signal du détecteur (50) la composante à fréquence de modulation de phase est réglée à zéro.

10. Dispositif de mesure selon l'une des revendication 7 à 9, caractérisé par le fait que

(a) un troisième miroir (40) formant le résonateur annulaire (12) est semi-transparent, une partie de la lumière se déplacant dans le premier direction de déplacement rotatif passant par le troisième miroir (40) semi-transparent en première faisceau partiel et une partie de la lumière se déplacant dans le second direction de déplacement rotatif passant par celui en second faisceau partiel,

(b) la lumière du premier faisceau partiel tombe sur le premier détecteur (48), et

(c) la lumière du second faisceau partiel tombe sur le second détecteur (50), les deux détecteurs (48, 50) formant des parties dudit dispositif détecteur répondant aux différences des ondes lumineuses se déplacants au premier et dans la seconde direction de déplacement rotatif.

11. Dispositif de mesure selon la revendication 2, caractérisé par le fait que

(a) le résonateur annulaire (12) est un guide d'ondes (56) fermé,

(b) un guide d'ondes de laser (58) est disposé sur l'un des côtés de ce guide d'ondes fermé (56) et optiquement couplé à celui-ci, auquel est appliqué le faisceau laser d'un laser (10),

(c) un guide d'ondes de réflecteur d'extrémité (62) est disposé sur l'autre côté de ce guide d'ondes fermé (56) et optiquement couplé à celui-ci,

(d) le réflecteur d'extrémité (16) est disposé par rapport au guide d'ondes de réflecteur d'extrémité (62) de sorte que la lumière du premier direction de déplacement rotatif, couplé hors du guide d'ondes fermé dans le guide d'ondes de réflecteur d'extrémité (62) est rejettée de nouveau dans le guide d'ondes de réflecteur d'extrémité (62) et partiellement couplée dans le second direction de déplacement rotatif de nouveau dans le guide d'ondes fermé (56).

12. Dispositif de mesure selon la revendication 8, caractérisé par le fait que

(a) le guide d'ondes fermé (56) est un résonateur optique intégré, et

(b) le faisceau de laser du laser (10) est appliqué par un système optique d'alimentation (66) au guide d'ondes de laser (58).

13. Dispositif de mesure selon la revendication 13, caractérisé par le fait que

(a) un premier modulateur de phase (84) est prévu au guide d'ondes fermé (56), et/ou

(b) un second modulateur de phase (86) est prévu au guide d'ondes de réflecteur d'extrémité (62) entre le lieu de l'accouplement optique au guide d'ondes fermé (58) et au réflecteur d'extrémité (16).

14. Dispositif de mesure selon la revendication 11 ou 12, caractérisé par le fait que des pièges de lumière (68, 70) sont disposées aux extrémités du guide d'ondes de laser (58) ou du réflecteur d'ondes de réflecteur d'extrémité (62), respectivement, ces extrémités étant opposées au laser (10) ou au réflecteur d'extrémité (16).

15. Dispositif de mesure selon l'une des revendications 11 à 14, caractérisé par le fait que

(a) un premier guide d'ondes de détecteur (72) est optiquement couplé au guide d'ondes de réflecteur d'extrémité (62) entre le lieu d'accouplement optique au guide d'ondes fermé (58) et au réflecteur d'extrémité (16), une partie de la lumière guidée par le guide d'ondes fermé (56) dans la direction vers le réflecteur d'extrémité (16), et ayant parcouru le guide d'ondes fermé (56) dans la première direction de déplacement rotatif, étant guidée par le premier guide d'ondes de détecteur au premier détecteur (76),

(b) un second guide d'ondes de détecteur (78) est optiquement couplé au guide d'ondes de laser (58) entre le lieu de l'accouplement optique au guide d'ondes fermé (56) et au laser (10), une partie de la lumière guidée par le guide d'ondes fermé (56) par le guide d'ondes de laser (58) en direction vers le laser (10), étant guidée par le second guide d'ondes de détecteur au second détecteur (82).

16. Dispositif de mesure selon la revendication 11, caractérisé par le fait que

(a) le guide d'ondes fermé (56) est formé par un anneau de fibre (88) guidant la lumière,

(b) le guide d'ondes de laser (58) est formé par une fibre guidant la lumière (90) optiquement couplé par un accoupleur de fibre (92) à l'anneau de fibre (88),

(c) le guide d'ondes de réflecteur d'extrémité (62) est formé par une fibre guidant la lumière (94) optiquement couplé par un accoupleur de fibre (96) à l'anneau de fibre (88).

17. Dispositif de mesure selon la revendication 15 et 16, caractérisé par le fait que le premier et le second guide d'ondes de détecteur (72, 78) sont formés par une fibre guidant la lumière (96, 98) chacun, optiquement accouplés au moyen d'un accoupleur de fibre (100, 102) chacun, à l'anneau de fibre (88).

18. Dispositif de mesure selon la revendication 17, caractérisé par le fait qu'un autre accoupleur de fibre (102) est prévu sur le fibre (90) formant le guide d'ondes de laser (58) entre le laser (10) et l'accoupleur de fibre (92) afin d'optiquement accoupler le guide d'ondes de laser (58) à l'anneau de fibre (88), afin d'accoupler le fibre (90) au fibre (98) formant le second guide d'ondes de détecteur (78).

19. Dispositif de mesure selon la revendication 17, caractérisé par le fait qu'un autre accoupleur de fibre (100), est prévu sur le fibre (94) formant le guide d'ondes de réflecteur d'extrémité (62) entre le réflecteur d'extrémité (16) et l'accoupleur de fibre (96) afin d'optiquement accoupler le guide d'ondes de réflecteur d'extrémité (62) à l'anneau de fibre (88), afin d'accoupler le fibre (94) au fibre (96) formant le premier guide d'ondes de détecteur (72).

20. Dispositif de mesure selon la revendication 1, caractérisé par le fait que

(a) le résonateur annulaire (12) comprend un guide d'ondes fermé (106),

(b) le faisceau de laser est appliqué à un premier guide d'ondes (108) accouplé sur un côté du guide d'ondes fermé (106) à celui-ci de sorte qu'une onde lumineuse se déplacant dans le guide d'ondes fermé (106) dans la première direction de déplacement rotatif est engendrée,

(c) un second guide d'ondes (112) est optiquement accouplé au premier guide d'ondes (108) entre le laser (10) et le lieu de l'accouplement optique du premier guide d'ondes (108) et le guide d'ondes fermé (106),

(d) le second guide d'ondes (112) est optiquement accouplé, sur le côté opposé au premier guide d'ondes (108), au guide d'ondes fermé (106) de sorte qu'une onde lumineuse se déplacant dans la seconde direction de déplacement rotatif dans le guide d'ondes fermé (106).

21. Dispositif de mesure selon la revendication 20, caractérisé par le fait que

(a) le premier et le second guide d'ondes (108, 112) sont disposés respectivement tangentiellement au guide d'ondes fermé (106) de sorte que la lumière dans la première direction de déplacement rotatif est et encouplée du laser (10) par le premier guide d'ondes (106) et couplée dehors par le guide d'ondes fermé (106) dans le premier guide d'ondes (108), et la lumière dans la seconde direction de déplacement rotatif est et alimenté par le laser (10) par le second guide d'ondes (112) dans le guide d'ondes fermé (106) et couplé hors par le guide d'ondes fermé (106) dans le second guide d'ondes (112), et

(b) un détecteur (118, 120) à la fois est disposé aux extrémités opposées au laser (10) du premier et du second guide d'ondes (108, 112).

22. Dispositif de mesure selon la revendication 21, caractérisé par le fait qu'un modulateur de phase (122) est prévu dans la partie du premier guide d'ondes (108) entre le laser (10) et le lieu de l'accouplement optique avec le second guide d'ondes (112).

**Claims**

1. Measuring device including a laser (10) and a ring resonator (12) for measuring a physical quantity for varying in opposite direction the optical path lengths of the ring resonator (12) for light waves travelling in opposite rotatory travel directions in the ring resonator (12), comprising

(a) a passive ring resonator (12) having a first and a second rotatory light travel direction,

(b) a laser (10) arranged outside the ring resonator and optically coupled with the ring resonator (12) for generating a light wave travelling in the first rotatory travel direction in the ring resonator (12) and a light wave travelling in the second rotatory travel direction,

(c) modulation means for modulating the laser light,

(d) the optical path lengths for the light wave travelling in the first rotatory travel direction in the ring resonator (12) and the light wave travelling in the second rotatory travel direction in the ring resonator (12), being differently influenced by said physical quantity, and

(e) a detector device including a first detector (48) impinged by light of the light wave which travels in the first rotatory travel direction and is coupled out from the ring resonator (12), and a second detector (50) impinged by light of the light wave which travels in the second rotatory travel direction and is coupled out from the ring resonator is applied, characterised in that

(f) the ring resonator (12) is coupled in an optically non-isolated manner with the laser (10) and forms a part of the resonance cavity of the laser (10),

(g) the optical path length of the resonance cavity is modulated by the modulation means (46) at a modulation frequency for phase modulation of the light rotatorily travelling in the resonance cavity,

(h) an actuator (46) is arranged to be controlled by the signal of the second detector (50) via regulation means (51) to which is applied, as input value, a component of the signal having the modulation frequency, the optical path length of the resonance cavity being adjustable by this actuator such that in the signal of the second detector (50) the component with the phase modulation frequency becomes zero, and the laser being tuned to the thus regulated resonance frequency of the light travelling in the second rotatory travel direction, and

(i) the signal of the second detector and which signal is modulated at the modulation frequency, is adapted to be output as measure of the quantity to be measured.

2. Measuring device as set forth in claim 1, characterised in that

(a) the resonance cavity of the laser (10) is bounded on the side of the ring resonator by an end reflector (16), and

(b) said end reflector (16) of the laser is optically arranged at the ring resonator (12) on the side remote from the laser (10) such that

the light wave emitted by the laser (10) passes through the ring resonator (12) in the first rotatory travel direction and impinges upon the end reflector (16), and

the light wave reflected by the end reflector (16) passes through the ring resonator (12) in the opposite second rotatory travel direction.

3. Measuring device as set forth in claim 1 or 2, characterised in that the laser (10) is a semiconductor laser dereflected on the side of the ring resonator by reflection-reducing means.

4. Measuring device as set forth in claim 3, characterised in that filter means are provided in the resonance cavity, which filter means are tuned to one of the different resonance frequencies of the ring resonator.

5. Measuring device as set forth in claim 4, characterised in that the filter means are formed by an etalon.

6. Measuring device as set forth in claim 4, characterised in that, as filter means, the end reflector (44) remote from the ring resonator is constructed as grating reflecting one of the different resonance frequencies of the ring resonator in the direction of incidence.

7. Measuring device as set forth in any one of claims 2 to 6, characterised in that

(a) the ring resonator (12) has four mirrors (34, 36, 38, 40) arranged at the corners of a rectangle and inclined to the beam direction, and by which the light is guided in the first and second rotatory travel directions is guided along a closed path,

(b) a first one of these mirrors (34) is adjacent to the laser (10) and formed semitransparently for the entrance of the laser beam (32) into the ring resonator (12),

(c) a second one of these mirrors (38) is formed semitransparently,

(d) the end reflector is impinged by the light passing through the ring resonator (12) in the first rotatory travel directions and through the second mirror (38) and reflects this light in the direction of incidence such that a part of this reflected light passes again through the second semitransparent mirror (38) and through the ring resonator (12) in the second rotatory travel direction.

8. Measuring device as set forth in claim 7, characterised in that

(a) the end reflector (16) is a mirror arranged perpendicularly to the beam direction,

(b) this mirror is arranged at an actuator (46) variable in length in beam direction by an electrical signal, and

(c) the actuator (46) has applied thereto a modulation signal, the actuator (46) and the mirror forming the end reflector (16) representing parts of said modulation means for modulation of the laser light.

9. Measuring device as set forth in claim 8, characterised in that

(a) a regulator (51) is provided, to which the signal of the detector (50) is applied and onto which falls light having passed through the ring resonator in the second rotatory travel direction,

(b) a d.c. voltage signal is adapted to be applied to the actuator (46) through the regulator (51) such that in the signal of the detector (50) the component having the phase modulation frequency is regulated to zero.

10. Measuring device as set forth in any one of claims 7 to 9, characterised in that

(a) a third one of the mirrors (40) forming the ring resonator (12) is semitransparent, a part of the light travelling in the first rotatory travel direction and a part of the light travelling in the second rotatory travel direction respectively passing in a first partial beam and a second partial beam through the third semitransparent mirror,

(b) the light of the first partial beam falls on the first detector (48), and

(c) the light of the second partial beam falls on the second detector (50), both detectors (48, 50) forming part of said detector device responding to the differences between the light waves travelling in the first and second rotatory travel directions.

11. Measuring device as set forth in claim 2, characterised in that

(a) the ring resonator (12) is a closed waveguide (56),

(b) a laser waveguide (58) is arranged on one side of this closed waveguide (56) and optically coupled with said closed waveguide (56) and impinged by the laser beam of a laser (10),

(c) an end reflector waveguide (62) is arranged on the other side of this closed waveguide (56) and optically coupled with the closed waveguide (56),

(d) the end reflector (16) is arranged with respect to the end reflector waveguide (62) such that the light of the first rotatory travel direction coupled out from the closed waveguide into the end reflector waveguide (62), is reflected by the end reflector (16) back into the end reflector waveguide (62) and partially coupled in again into the closed waveguide (56) in the second rotatory travel direction.

12. Measuring device as set forth in claim 8, characterised in that

(a) the closed waveguide (56) is an integrated optical resonator, and

(b) the laser waveguide is impinged by the light beam of the laser (10) through a couple-in optical system (66).

13. Measuring device as set forth in claim 13 characterised in that

(a) a first phase modulator (84) is provided at the closed waveguide (56) and/or

(b) a second phase modulator (86) is provided at the end reflector waveguide (62) between the location of the optical coupling with the closed waveguide (58) and the end reflector (16).

14. Measuring device as set forth in claim 11 or 12, characterised in that light traps (68, 70) are arranged at the ends of the laser waveguide (58) and the end reflector waveguide (62), respectively, and which ends are located opposite to the laser (10) and the end reflector (16), respectively.

15. Measuring device as set forth in any one of claims 11 to 14, characterised in that

(a) a first detector waveguide (72) is optically coupled with the end reflector waveguide (62) between the location of the optical coupling with the closed waveguide (58) and the end reflector (16), a part of the light which has passed through the closed waveguide (56) in the first rotatory travel direction and which is guided from the closed waveguide (56) in the direction to the end

13

reflector (16), being guided through the first detector waveguide to a first detector (76),

(b) a second detector waveguide (78) is optically coupled with the laser waveguide (58) between the location of the optical coupling with the closed waveguide (56) and the laser (10), a part of the light guided from the closed waveguide (56) through the laser waveguide (58) in the direction to the laser (10), being guided through this detector waveguide to a second detector (82).

16. Measuring device as set forth in claim 11, characterised in that

(a) the closed waveguide (56) is formed by a light guiding fiber ring (88),

(b) the laser waveguide (58) is formed by a light guiding fiber (90) optically coupled through a fiber coupling device (92) with the fiber ring (88),

(c) the end reflector waveguide (62) is formed by a light guiding fiber (94) optically coupled through a fiber coupling device (96) with the fiber ring (88).

17. Measuring device as set forth in claims 15 and 16, characterised in that the first and the second detector waveguide (72, 78) are each formed by a light guiding fiber (96, 98), optically coupled by means of a respective fiber coupling device (100, 102) with the fiber ring (88).

18. Measuring device as set forth in claim 17, characterised in that a further fiber coupling device (102) is provided at the fiber (90) which forms the laser waveguide (50) between the laser (10) and the fiber coupling device (92) for optically coupling the laser waveguide (58) with the fiber ring (88), for optically coupling this fiber (90) with the fiber (98) forming the second detector waveguide (78).

19. Measuring device as set forth in claim 17, characterised in that a further fiber coupling device (100) is provided at the fiber (94) which forms the end reflector waveguide (62) between the end reflector (16) and the fiber coupling device (96) for optically coupling the end reflector waveguide (62) with the fiber ring (88), for optically coupling this fiber (94) with the fiber (96) forming the first detector waveguide (72).

20. Measuring device as set forth in claim 1, characterised in that

(a) the ring resonator (12) comprises a closed waveguide (106),

(b) a first waveguide (108) is impinged by the laser beam of the laser (10) and optically coupled on one side of the closed waveguide (106) therewith such that a light wave is produced which travels in the first rotatory travel direction in the closed waveguide (106),

(c) a second waveguide (112) is optically coupled with the first waveguide (108) between the laser (10) and the location of the optical coupling of the first waveguide (108) and the closed waveguide (106), with the first waveguide (108),

(d) the second waveguide (112) is optically coupled on the side opposite to the first waveguide (108) with the closed waveguide (106) such that a light wave is produced which travels in the second rotatory travel direction in the closed waveguide (106).

21. Measuring device as set forth in claim 20, characterised in that

(a) the first and the second waveguide (108, 112) are each arranged tangentially, relative to the closed waveguide (106) such that the light having the first rotatory travel directions is coupled in from the laser (10) through the first waveguide (106) as well as coupled out from the closed waveguide (106) into the first waveguide (108), and the light having the second rotatory travel direction is coupled in from the laser (10) through the second waveguide (112) into the closed waveguide (106) as well as coupled out from the closed waveguide (106) in the second wave guide (112), and

(b) one detector each (118, 120) is respectively arranged at the first and second waveguides (108, 112) at the ends remote from the laser (10).

22. Measuring device as set forth in claim 21, characterised in that a phase modulator (122) is provided in the part of the first waveguide (108) between the laser (10) and the location of the optical coupling with the second waveguide (112).

*Fig. 1*

*Fig. 4*

SIGNAL

DREHGESCHWINDIGKEIT

Fig.2

Fig.3

- 51 -    - 47 -

50    46

16

40    42

38

- 12 -

32    36

44

10    52    54    34    *Fig. 5*

82

78

68    60

58    44

80

84    10

- 12 -

56

70    74    86    16

62    64    72

76

*Fig. 6*

Fig.7

Fig.8